# EUROPÄISCHE PATENTANMELDUNG

(11) **EP 1 881 441 A2**
(43) Veröffentlichungstag der Anmeldung: **23.01.2008**
(21) Anmeldenummer: 07012338.5
(22) Anmeldetag: 23.06.2007
(51) Int. Cl.: G06F 21/24

(54) **Verfahren zur graphischen Anzeige digitaler Daten und Vorrichtung zur Durchführung des Verfahrens**

(30) Priorität: 19.07.2006 DE 102006033820
(71) Anmelder: Secunet Security Networks Aktiengesellschaft, 45128 Essen (DE)
(72) Erfinder: Martius, Kai, Dr., 01738 Dorfhain (DE); Hühnlein, Detlef, Dr. rer. nat., 96247 Michelan (DE)
(74) Vertreter: Rohmann, Michael

(57) **Zusammenfassung**

Die Erfindung betrifft ein Verfahren zur graphischen Anzeige digitaler Daten, wobei von einem ersten Datenverarbeitungssystem (A) Nutzdaten (ND) von einem Datenspeicher (1) ausgelesen und daraus Bilddaten (BD) gebildet werden. Die Bilddaten (BD) werden von dem ersten Datenverarbeitungssystem (A) mit Sicherheitsmerkmalen (SM) versehen, wobei die Bilddaten (BD) nachfolgend zu einem zweiten Datenverarbeitungssystem (B) übertragen werden. Die Bilddaten (BD) werden von einer Bildausgabevorrichtung (3) des zweiten Datenverarbeitungssystems (B) angezeigt.

## Beschreibung

Die Erfindung betrifft ein Verfahren zur graphischen Anzeige digitaler Daten sowie eine Vorrichtung zur Durchführung des Verfahrens.

Die vertrauenswürdige Anzeige von digitalen Daten setzt im Regelfall eine speziell gesicherte Systemplattform voraus, da auf einem unsicheren System befindliche Schadsoftware (Viren, Würmer, Trojaner etc.) andernfalls die Nutz- oder Bilddaten vor der Anzeige manipulieren könnten (vgl. Hanno Langweg: "Malware Attacks on Electronic Signatures Revisited". In: J. Dittmann (ed.): "Sicherheit 2006", Konferenzband der 3. Jahrestagung Fachbereich Sicherheit der Gesellschaft für Informatik. SS. 244-255). Eine solche Anzeigekomponente wird beispielsweise für die vertrauenswürdige Darstellung von zu signierenden oder signierten Daten und Signaturergebnissen gemäß § 17 Abs. 2 des Signaturgesetzes und § 15 Abs. 2 der Signaturverordnung oder zur vertrauenswürdigen Anzeige von sensiblen Informationen, wie z.B. Notfalldaten im medizinischen Bereich, benötigt.

Der Erfindung liegt das technische Problem zugrunde, eine sichere Anzeige von Daten auf einem unsicheren System zu ermöglichen.

Zur Lösung des technischen Problem lehrt die Erfindung ein Verfahren zur graphischen Anzeige digitaler Daten, wobei von einem ersten Datenverarbeitungssystem Nutzdaten von einem Datenspeicher ausgelesen und daraus Bilddaten gebildet werden, wobei die gebildeten Bilddaten von dem ersten Datenverarbeitungssystem mit Sicherheitsmerkmalen versehen werden, wobei die Bilddaten nachfolgend zu einem zweiten Datenverarbeitungssystem übertragen werden und wobei die Bilddaten von einer Bildausgabevorrichtung des zweiten Datenverarbeitungssystems einem Benutzer angezeigt werden. Das erste Datenverarbeitungssystem, von dem die Bilddaten und die Sicherheitsmerkmale erzeugt werden, ist ein vertrauenswürdiges System, welches gegen die Manipulation von Schadsoftware geschützt ist. Da die zu dem zweiten, möglicherweise unsicheren Datenverarbeitungssystem übertragenen und dort angezeigten Bilddaten mit Sicherheitsmerkmalen versehen sind, kann der Benutzer anhand der mit den Bilddaten verknüpften Sicherheitsmerkmalen die Integrität und Authentizität der Daten überprüfen. Ein Datenverarbeitungssystem meint im Rahmen der Erfindung ein System aus Hardware und Software, wobei das Datenverarbeitungssystem die Eingabe, Verarbeitung und Ausgabe digitaler Daten ermöglicht. Von einem sicheren oder vertrauenswürdigen System spricht man, sofern die Integrität und Authentizität der Hardware und der darauf ausgeführten Software sichergestellt ist. Die Integrität der Hard- und Software ist gegeben, wenn diese vollständig und unverändert ist. Unter dem Nachweis der Authentizität von elektronischen Daten versteht man den Nachweis über die Echtheit der Daten und die eindeutige Zuordnung zum Verfasser, Ersteller oder Absender. Bei einem unsicheren oder nicht vertrauenswürdigen System hingegen ist dies unter Umständen nicht gewährleistet, so dass neben oder statt der erwarteten Software auch Schadsoftware laufen kann, die den Ablauf von Programmen und/oder die Ein- und Ausgabe manipulieren kann. Nutzdaten sind im Rahmen der Erfindung beliebige digitale Daten, die durch das erfindungsgemäße Verfahren in eine bildhafte Form, die so genannten Bilddaten, überführt und darauf einem Benutzer an der Bildausgabevorrichtung angezeigt werden sollen. Im Rahmen der Erfindung sind gesicherte Bilddaten digitale Daten, die aus den Bilddaten unter Hinzufügen von Sicherheitsmerkmalen erzeugt werden.

Sicherheitsmerkmale sind im Rahmen der Erfindung beliebige digitale Daten, die mit den Bilddaten verknüpft sind und dem Benutzer die Prüfung der Integrität und Authentizität der angezeigten Bilddaten und damit der Nutzdaten ermöglichen.

Die Bilddaten enthalten typischerweise Farb- und Helligkeitswerte, die einzelnen Bildpunkten oder auch einem Bereich von Bildpunkten der Bildausgabevorrichtung zugeordnet sind, wobei auch die üblichen Verfahren zur Kompression von Bilddaten eingesetzt werden können. Im Rahmen der Erfindung liegt, dass jedes aus den Bilddaten von der Bildausgabevorrichtung erzeugte Bild zumindest ein Sicherheitsmerkmal aufweist. Insbesondere bei einer Bildabfolge kann jedoch auch vorgesehen sein, dass lediglich ein Teil der angezeigten Bilder mit Sicherheitsmerkmalen versehen ist. Die Übertragung der Bilddaten von dem ersten Datenverarbeitungssystem zu dem zweiten Datenverarbeitungssystem kann grundsätzlich durch die Anforderung durch das zweite Datenverarbeitungssystem oder eines externen Gerätes oder von dem ersten Datenverarbeitungssystem selbst veranlasst sein.

Gemäß einer ersten Ausgestaltung der Erfindung ist vorgesehen, dass Sicherheitsmerkmale die nur dem vertrauenswürdigen System und dem Benutzer bekannt sind, in die Bilddaten integriert werden, wobei der Benutzer anhand dieser zusätzlichen Informationen in den angezeigten Bilddaten erkennen kann, dass die Aufbereitung der Daten durch das vertrauenswürdige erste Datenverarbeitungssystem erfolgt sein muss. Als Sicherheitsmerkmale können beispielsweise für den Benutzer sichtbare Wasserzeichen in die Bilddatei eingebettet werden. Die Sicherheitsmerkmale können dabei von dem Benutzer zunächst in das erste, vertrauenswürdige Datenverarbeitungssystem eingegeben oder durch eine in dem ersten Datenverarbeitungssystem gespeicherte Voreinstellung durch den Benutzer festgelegt werden. Im Rahmen der Erfindung können dabei alle an der Bildausgabevorrichtung aus den Bilddaten erzeugten Bilder das gleiche Sicherheitsmerkmal oder den gleichen Satz an Sicherheitsmerkmalen aufweisen. Alternativ kann im Rahmen dieser Ausgestaltung auch vorgesehen sein, dass das erste Datenverarbeitungssystem nacheinander oder zufällig eines oder mehrere von vorgegebenen Sicherheitsmerkmalen auswählt und mit den Bilddaten verknüpft.

In alternativen Ausgestaltungen der Erfindung ist vorgesehen, dass die Sicherheitsmerkmale von dem vertrauenswürdigen ersten Datenverarbeitungssystem zufällig gewählt oder aus den Nutzdaten oder Bilddaten abgeleitet und über eine sichere Verbindung an den Benutzer übertragen werden. Vorzugsweise können die Sicherheitsmerkmale dem Benutzer im Display eines Chipkartenlasers oder eines persönlichen Gerätes, wie z.B. eines Funkempfängers (Pager), eines Mobiltelefons oder einer für den Empfang von Funksignalen ausgerüsteten Armbanduhr angezeigt werden. Die von der Bildausgabevorrichtung angezeigten Bilddaten zeigen dabei Sicherheitsmerkmale, die dem Benutzer nicht von vorneherein bekannt sind. Der Benutzer kann jedoch die Sicherheitsmerkmale, beispielsweise Ziffern, Ziffernfolgen und Symbole, mit der Anzeige im Display des Chipkartenlesers bzw. des persönlichen Gerätes abgleichen und so die Integrität und Authentizität der Bild- und Nutzdaten überprüfen. Im Rahmen der Erfindung liegen sowohl kabelgebundene als auch auf einer Funkübertragung basierende Datenverbindungen zwischen dem ersten Datenverarbeitungssystem und dem Chipkartenleser bzw. dem persönlichen Gerät. Gemäß einer bevorzugten Weiterbildung des erfindungsgemäßen Verfahrens ist vorgesehen, dass auf die Anzeige der Bilddaten und der Sicherheitsmerkmale an dem Chipkartenleser oder dem persönlichen Gerät eine Eingabe des Benutzers abgefragt wird, wobei durch die Eingabe ein weiterer Verarbeitungsschritt des ersten Datenverarbeitungssystems z.B. die Erzeugung einer elektronischen Signatur über die angezeigten Bilddaten ausgelöst wird.

Außerdem liegt es auch im Rahmen der Erfindung zur Erzeugung der Sicherheitsmerkmale digitale Signaturverfahren oder kryptographische Nachrichtenprüfsummen (Message Authentication Codes) zu verwenden, die den zu dem unsicheren zweiten Datenverarbeitungssystem übertragenen Bilddaten beigefügt oder mit ihnen verknüpft werden. Im Rahmen der Erfindung kann auch vorgesehen sein, dass für die Erzeugung der Bilddaten aus den Nutzdaten von dem ersten Datenverarbeitungssystem Formularvorlagen, wie beispielsweise Templates oder Style Sheets, verwendet werden.

Gegenstand der Erfindung ist auch eine Vorrichtung zur Durchführung des erfindungsgemäßen Verfahrens mit einer ersten Recheneinrichtung zur Erzeugung von Bilddaten, die einen Datenspeicher mit Nutzdaten aufweist, einer zweiten Recheneinrichtung mit einer Bildausgabevorrichtung zur Anzeige von Bilddaten und einem Netzwerk, dass die erste Recheneinrichtung mit der zweiten Recheneinrichtung zur Übertragung der Bilddaten verbindet, wobei die Bilddaten mit von der ersten Recheneinrichtung erzeugten Sicherheitsmerkmalen versehen sind. Die erste Recheneinrichtung ist dabei dem ersten Datenverarbeitungssystem und die zweite Recheneinrichtung dem zweiten Datenverarbeitungssystem zugeordnet. Die Ausgestaltung des die Recheneinrichtungen verbindenden Netzwerk ist nicht eingeschränkt und kann beispielsweise als lokales Netzwerk (local area network LAN), Weitverkehrsnetzwerk (wide area network WAN) oder als gesichertes virtuelles privates Netzwerk (virtual private network VPN) ausgeführt sein. Eine alternative Ausgestaltung der Erfindung betrifft eine Vorrichtung mit einer einzigen Recheneinrichtung, die einen Datenspeicher mit Nutzdaten und eine Bildausgabevorrichtung zur Anzeige von Bilddaten aufweist, wobei auf der Recheneinrichtung ein erster Rechenprozess zur Erzeugung von Bilddaten aus den Nutzdaten implementiert ist, wobei auf der Recheneinrichtung ein zweiter Rechenprozess zur Ausgabe von Bilddaten implementiert ist, wobei der erste und der zweite Rechenprozess logisch voneinander getrennt sind und wobei der erste Rechenprozess und der zweite Rechenprozess ausschließlich über eine Interprozesskommunikationsschnittstelle verbunden sind.

Im Rahmen der Erfindung weist die erfindungsgemäße Vorrichtung vorzugsweise einen separaten Chipkartenleser oder ein persönliches Gerät, beispielsweise einen Funkempfänger oder ein Mobiltelefon auf, wobei der Chipkartenleser bzw. das persönliche Gerät über eine separate Datenverbindung mit der ersten Recheneinrichtung bzw. mit dem ersten Rechenprozess verbunden ist. Bei einer solchen Ausgestaltung kann eine besonders hohe Sicherheit dadurch erreicht werden, dass die Bilddaten mit Sicherheitsmerkmalen versehen sind, die zum Abgleich durch den Benutzer auch an dem Display des Chipkartenlesers bzw. des persönlichen Gerätes angezeigt werden.

Das erfindungsgemäße Verfahren und die erfindungsgemäße Vorrichtung sind im besonderen Maße für einen Einsatz im medizinischen Bereich geeignet, da die zu verarbeitenden Daten besonders sensibel und für die Gesundheit des Patienten von unmittelbarer Relevanz sind, so dass eine sichere Verarbeitung der Daten erforderlich ist. Andererseits ist im medizinischen Bereich, beispielsweise in einem Krankenhaus oder in einer Arztpraxis, eine möglichst einfache Handhabung der Daten, auch von technisch wenig versiertem Personal wünschenswert, wobei vorzugsweise auch unsichere Systeme mit handelsüblicher Hard- und Software eingesetzt werden sollen. Gemäß dem erfindungsgemäßen Verfahren können auch auf solchen unsicheren Systemen Bilddaten mit einem hohen Maß an Sicherheit angezeigt werden.

Die Erfindung ist im Folgenden anhand einer lediglich ein Ausführungsbeispiel darstellenden Zeichnung erläutert. Es zeigen:

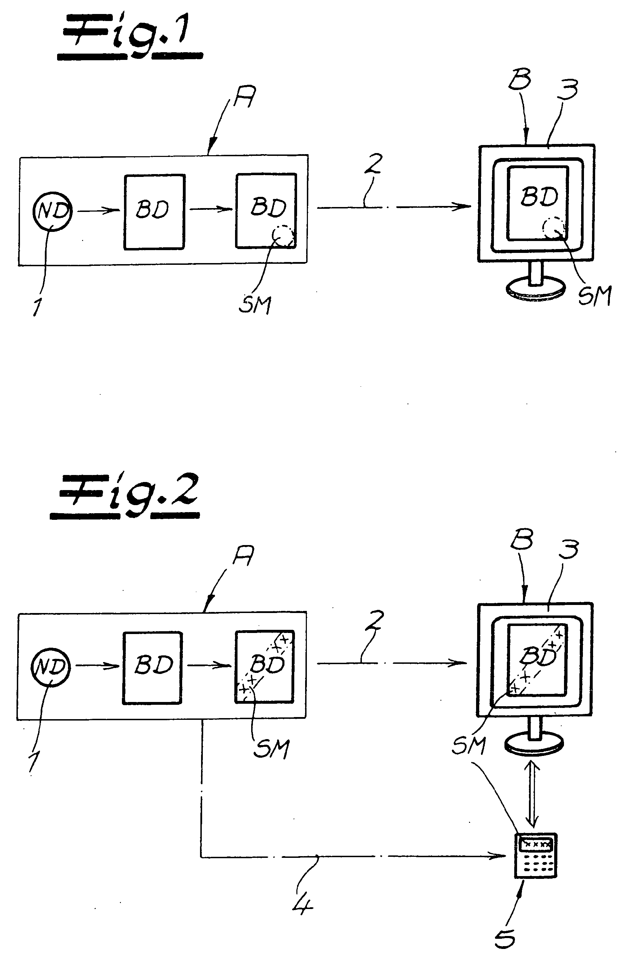

- Fig. 1 und Fig. 2: alternative Ausgestaltungen des erfindungsgemäßen Verfahrens.

Gemäß dem schematisch in der Fig. 1 dargestellten Verfahren zur Anzeige digitaler Daten werden von einem ersten Datenverarbeitungssystem A Nutzdaten ND von einem Datenspeicher 1 ausgelesen und daraus Bilddaten BD gebildet. Die Bilddaten BD werden von dem ersten Datenverarbeitungssystem A mit Sicherheitsmerkmalen SM versehen und nachfolgend über eine Datenverbindung 2 zu einem zweiten, möglicherweise nicht vertrauenswürdigen Datenverarbeitungssystem B übertragen. Das zweite Datenverarbeitungssystem B weist eine Bildausgabevorrichtung 3 auf von der die Bilddaten BD einem Benutzer graphisch angezeigt werden, so dass dieser die Integrität und Authentizität der angezeigten Bilddaten BD anhand des mit den Bilddaten BD verknüpften Sicherheitsmerkmals SM überprüfen kann.

Es liegt im Rahmen der Erfindung, dass für die Erzeugung der Bilddaten BD aus den Nutzdaten ND entsprechende Formatvorlagen, wie z.B. Templates oder Style Sheets verwendet werden. Insbesondere liegt es auch im Rahmen der Erfindung, dass die Verknüpfung der Sicherheitsmerkmale SM mit den Bilddaten BD durch die Einbettung von einem oder mehreren sichtbaren Wasserzeichen geschieht, so dass die Sicherheitsmerkmale SM weitgehend untrennbar mit den Bilddaten BD verknüpft sind. Hierbei liegt es auch im Rahmen der Erfindung die Sicherheitsmerkmale SM in einer Form einzubetten, die zwar für den menschlichen Benutzer erkennbar, aber von einer rechnergestützten Text- und Bilderkennung (Optical Character Recognition - OCR) eines Angreifers nicht oder nur schwer auswertbar sind. Weiterhin liegt es im Rahmen der Erfindung für die Übertragung der Bilddaten BD von dem ersten Datenverarbeitungssystem A zu dem zweiten Datenverarbeitungssystem B eine netzwerkbasierte Übertragung zu verwenden. Insbesondere liegt es hier im Rahmen der Erfindung ein so genanntes Thin-Client-Protokoll (z.B. X.11, Citrix Independent Computing Architecture (ICA) oder Remote Desktop Protocol (RDP)) oder ein Web-basiertes Verfahren zu verwenden, wobei typischerweise eine erste Recheneinrichtung dem ersten Datenverarbeitungssystem A und eine zweite Recheneinrichtung dem zweiten Datenverarbeitungssystem B zugeordnet ist. Alternativ kann die Übertragung auch über die so genannte Interprozesskommunikation (Interprozesskommunikationsschnittstelle) eines Rechnerbetriebsystems erfolgen, so dass sowohl das erste Datenverarbeitungssystem A und das zweite Datenverarbeitungssystem B voneinander logisch getrennt auf der gleichen Recheneinrichtung untergebracht sein können.

Im Rahmen der Erfindung können die Sicherheitsmerkmale SM vom vertrauenswürdigen ersten Datenverarbeitungssystem A für die jeweilige Nutzung zufällig gewählt oder aus den Nutzdaten ND oder Bilddaten BD abgeleitet werden, wobei die Sicherheitsmerkmale vorzugsweise auch über eine separate und/oder gesicherte Verbindung 4 an den Benutzer übertragen werden. Besonders bevorzugt ist eine Ausgestaltung, bei der während der Anzeige der mit den Sicherheitsmerkmalen SM versehenen Bilddaten BD die Sicherheitsmerkmale auch über die Verbindung 4 zu einer separaten Anzeigenkomponente 5 übertragen werden, wobei bereits eine geringe Leistungsfähigkeit der Verbindungen 4 ausreichend ist. Durch den Vergleich der an der Bildausgabevorrichtung 3 abgelesenen Sicherheitsmerkmale SM mit der Anzeige der separaten Anzeigekomponente 5 kann der Benutzer die Integrität und Authentizität der Daten überprüfen. Als Anzeigekomponente 5 kann vorzugsweise das Display eines Chipkartenlesers oder eines persönlichen Gerätes des Benutzers wie z.B. ein Funkempfänger (Pager), ein Mobiltelefon oder eine für den Empfang von digitalen Daten ausgerüstete Armbanduhr vorgesehen sein. Gemäß einer bevorzugten Weiterbildung ist dabei vorgesehen, dass auf die Anzeige der Bilddaten BD und der Sicherheitsmerkmale SM an dem Chipkartenleser oder dem persönlichen Gerät eine Eingabe des Benutzers abgefragt wird, wobei durch die Eingabe ein weiterer Verarbeitungsschritt des ersten Datenverarbeitungssystems A, z.B. die Erzeugung einer elektronischen Signatur über die angezeigten Bilddaten BD, ausgelöst wird. Alternativ liegt es auch im Rahmen der Erfindung, dass die für die Einbettung in die Bilddaten BD verwendeten Sicherheitsmerkmale SM vorab vom Benutzer gewählt und in das vertrauenswürdige Datenverarbeitungssystem A eingegeben werden, so dass der Benutzer einmalig die Integrität und Authentizität einer Anzeige erkennen kann.

## Patentansprüche

1. Verfahren zur graphischen Anzeige digitaler Daten,
wobei von einem ersten Datenverarbeitungssystem (A) Nutzdaten (ND) aus einem Datenspeicher (1) ausgelesen und daraus Bilddaten (BD) gebildet werden,
wobei die gebildeten Bilddaten (BD) von dem ersten Datenverarbeitungssystem (A) mit Sicherheitsmerkmalen (SM) versehen werden,
wobei die Bilddaten (BD) nachfolgend zu einem zweiten Datenverarbeitungssystem (B) übertragen werden und
wobei die Bilddaten (BD) von einer Bildausgabevorrichtung (3) des zweiten Datenverarbeitungssystems (B) einem Benutzer angezeigt werden.

2. Verfahren nach Anspruch 1, wobei die Sicherheitsmerkmale (SM) von dem ersten Datenverarbeitungssystem (A) zufällig ausgewählt werden.

3. Verfahren nach Anspruch 1, wobei die Sicherheitsmerkmale (SM) aus den Nutzdaten (ND) oder Bilddaten (BD) abgeleitet werden und über eine gesicherte Verbindung an den Benutzer übertragen werden.

4. Verfahren nach einem der Ansprüche 1 bis 3, wobei die Sicherheitsmerkmale (SM) dem Benutzer im Display eines Chipkartenlesers oder eines persönlichen Gerätes, wie z.B. eines Funkempfängers (Pager), eines Mobiltelefons oder einer für den Empfang von Funksignalen ausgerüsteten Armbanduhr, angezeigt werden.

5. Verfahren nach Anspruch 4, wobei auf die Anzeige der Bilddaten (BD) und der Sicherheitsmerkmale (SM) an dem Chipkartenleser oder dem persönlichen Gerät eine Eingabe des Benutzers abgefragt wird und wobei durch die Eingabe ein weiterer Verarbeitungsschritt des ersten Datenverarbeitungssystems (A), z.B. die Erzeugung einer elektronischen Signatur über die angezeigten Bilddaten (BD), ausgelöst wird.

6. Verfahren nach einem der Ansprüche 1 bis 5, wobei die Sicherheitsmerkmale (SM) als für den Benutzer sichtbare Wasserzeichen in die Bilddatei (BD) eingebettet werden.

7. Verfahren nach Anspruch 6, wobei die gebildeten Bilddaten (BD) von dem ersten Datenverarbeitungssystem (A) mit Sicherheitsmerkmalen (SM) versehen werden, die durch eine in dem ersten Datenverarbeitungssystem (A) gespeicherte Voreinstellung durch den Benutzer festgelegt sind.

8. Verfahren nach einem der Ansprüche 1 bis 7, wobei die Sicherheitsmerkmale (SM) durch digitale Signaturverfahren oder kryptographische Nachrichtenprüfsummen (Massage Authentication Codes) erzeugt werden.

9. Verfahren nach einem der Ansprüche 1 bis 8, wobei für die Erzeugung der Bilddaten (BD) aus den Nutzdaten (ND) von dem ersten Datenverarbeitungssystem (A) Formularvorlagen, wie beispielsweise Templates oder Style Sheets, verwendet werden.

10. Verfahren nach einem der Ansprüche 1 bis 9, wobei die Bilddaten (BD) von einer ersten Recheneinrichtung über ein Netzwerk zu einer zweiten Recheneinrichtung übertragen werden wobei die erste Recheneinrichtung dem ersten Datenverarbeitungssystem (A) und die zweite Recheneinrichtung dem zweiten Datenverarbeitungssystem (B) zugeordnet sind.

11. Vorrichtung zur Durchführung des Verfahrens nach einem der Ansprüche 1 bis 10, mit einer ersten Recheneinrichtung zur Erzeugung von Bilddaten (BD), die einen Datenspeicher (1) mit Nutzdaten (ND) aufweist, einer zweiten Recheneinrichtung mit einer Bildausgabevorrichtung (3) zur Anzeige von Bilddaten (BD) und einem Netzwerk, das die erste Recheneinrichtung mit der zweiten Recheneinrichtung zur Übertragung der Bilddaten (BD) verbindet, wobei die Bilddaten (BD) mit von der ersten Recheneinrichtung erzeugten Sicherheitsmerkmalen (SM) versehen sind.

12. Vorrichtung nach Anspruch 11, mit einem separaten Chipkartenleser oder einem persönlichen Gerät, beispielsweise einem Funkempfänger oder Mobiltelefon, wobei der Chipkartenleser bzw. das persönliche Gerät über eine separate Datenverbindung mit der ersten Recheneinrichtung verbunden ist.

13. Vorrichtung zur Durchführung des Verfahrens nach einem der Ansprüche 1 bis 9, mit einer Recheneinrichtung, die einen Datenspeicher (1) mit Nutzdaten (ND) und eine Bildausgabevorrichtung (3) zur Anzeige von Bilddaten (BD) aufweist, wobei auf der Recheneinrichtung ein erster Rechenprozess zur Erzeugung von Bilddaten (BD) aus den Nutzdaten (ND) implementiert ist, wobei auf der Recheneinrichtung ein zweiter Rechenprozess zur Ausgabe von Bilddaten (BD) (BD) implementiert ist, wobei der erste und der zweite Rechenprozess logisch von einander getrennt sind und wobei der erste Rechenprozess und der zweite Rechenprozess ausschließlich über eine Interprozesskommunikationsschnittstelle verbunden sind.

14. Vorrichtung nach Anspruch 13, mit einem separaten Chipkartenleser oder einem persönlichen Gerät, beispielsweise einem Funkempfänger oder Mobiltelefon, wobei der Chipkartenleser bzw. das persönliche Gerät über eine separate Datenverbindung mit dem ersten Rechenprozess verbunden ist.
